# DEMANDE DE BREVET EUROPEEN

(11) **EP 1 176 747 A1**
(43) Date de publication de la demande: **30.01.2002**
(21) Numéro de dépôt: 01402000.2
(22) Date de dépôt: 25.07.2001
(51) Int. Cl.: H04J 14/02, H04B 10/17

(54) **Procédé de régulation de puissance de longueurs d'ondes entrantes injectées dans un signal optique modulé**

(30) Priorité: 27.07.2000 FR 0009839
(71) Demandeur: SAGEM S.A., 75116 Paris (FR)
(72) Inventeur: Betoule, Daniel, c/o SAGEM SA, 75013 Paris (FR)
(74) Mandataire: Fruchard, Guy

(57) **Abrégé**

Le procédé de régulation de puissance d'au moins une longueur d'onde entrante injectée dans un signal optique modulé selon une série de longueurs d'ondes comporte les étapes de réaliser une mesure (5) de la puissance totale du signal modulé, d'en déduire une consigne de puissance moyenne par longueur d'onde et d'assurer une régulation de puissance individuelle (10) de la longueur d'onde entrante au moyen de la consigne de puissance moyenne.

## Description

La présente invention concerne un procédé de régulation de puissance de longueurs d'onde entrantes injectées dans un signal optique modulé.

On connaît des systèmes de transmission sous forme de signal optique modulé, généralement appelé DWDM, regroupant par multiplexage une série de signaux individuels chacun modulé à partir d'un signal porteur à une longueur d'onde déterminée. Par référence à la longueur d'onde du signal porteur, le signal individuel modulé est généralement dénommé "une longueur d'onde".

La transmission du signal optique modulé est assurée par un réseau ayant généralement une configuration en anneau ou une configuration linéaire. Le réseau peut être pourvu d'un équipement de centre (HUB) assurant la transmission de l'ensemble des longueurs d'ondes vers des équipements de collecte. Le réseau peut également être simplement constitué d'équipements de collecte reliés entre eux.

On sait que pour un fonctionnement satisfaisant du réseau, il est nécessaire que toutes les longueurs d'ondes soient transmises avec une puissance optique sensiblement identique et il est donc nécessaire d'assurer une régulation de puissance dans chaque équipement.

Selon les procédés actuels, la régulation de puissance est assurée de la même manière dans l'équipement de centre et dans les équipements de collecte, et consiste à prélever une partie du signal optique modulé, à démultiplexer l'ensemble des longueurs d'ondes, à convertir le signal optique correspondant à chaque longueur d'onde en un signal électrique, et à assurer une régulation de puissance individuelle de chacune des longueurs d'ondes par rapport aux autres, généralement par atténuation des longueurs d'ondes ayant la plus forte puissance. Les atténuateurs étant commandés de façon électrique, l'équipement doit donc comprendre un nombre de convertisseurs optique/électrique égal au nombre total de longueurs d'ondes contenues dans le signal modulé. Or les convertisseurs optique/électrique sont des organes coûteux et représentent donc une partie substantielle du prix de revient total de l'équipement. La dépense correspondant à l'utilisation d'un nombre de convertisseurs optique/électrique égal au nombre total des longueurs d'ondes se justifie au niveau de l'équipement de centre qui assure une gestion de l'ensemble des longueurs d'ondes. En revanche, une telle dépense ne se justifie pas dans les équipements de collecte où seules les longueurs d'ondes entrantes nécessitent une régulation de puissance pour les injecter dans le signal modulé au même niveau de puissance que les longueurs d'ondes présentes dans le signal modulé. Les procédés actuels sont donc inutilement coûteux.

Un but de l'invention est de proposer un procédé permettant de réduire le coût de la régulation de puissance dans les équipements de collecte.

En vue de la réalisation de ce but, on propose, selon l'invention, un procédé de régulation de puissance d'au moins une longueur d'onde entrante injectée dans un signal optique modulé selon une série de longueurs d'ondes, ce procédé comportant les étapes de réaliser une mesure de la puissance totale du signal modulé, d'en déduire une consigne de puissance moyenne par longueur d'onde, et d'assurer une régulation de puissance individuelle de la longueur d'onde entrante au moyen de la consigne de puissance moyenne.

Ainsi, dans la boucle de régulation de puissance il est nécessaire d'extraire seulement les longueurs d'ondes entrantes de sorte que le nombre de convertisseurs optique/électrique nécessaire est réduit au nombre de longueurs d'ondes entrantes.

Selon une version avantageuse de l'invention, le procédé comporte en outre l'étape d'amplifier le signal optique modulé selon une consigne de puissance totale, de préférence l'amplification selon une consigne de puissance totale est effectuée en amont de l'injection de longueurs d'ondes entrantes. Il est ainsi possible de ramener à une valeur souhaitée le niveau des puissances individuelles des signaux contenus dans le signal modulé sans qu'il soit nécessaire d'extraire chacune des longueurs d'ondes.

Selon d'autres aspects avantageux de l'invention, le procédé comporte en outre les étapes de mémoriser la puissance totale mesurée et/ou le nombre de longueurs d'ondes dans le signal modulé. Il est ainsi possible de poursuivre la mise en oeuvre du procédé selon l'invention même en cas de défaillance de certains éléments du réseau.

D'autres caractéristiques et avantages de l'invention apparaîtront à la lecture de la description qui suit d'un mode de réalisation particulier non limitatif en référence aux figures ci-jointes parmi lesquelles :
- la figure 1 illustre de façon schématique un équipement de collecte mettant en oeuvre le procédé selon l'invention sans amplification du signal modulé,
- la figure 2 illustre un équipement de collecte mettant en oeuvre le procédé selon l'invention avec amplification du signal modulé.

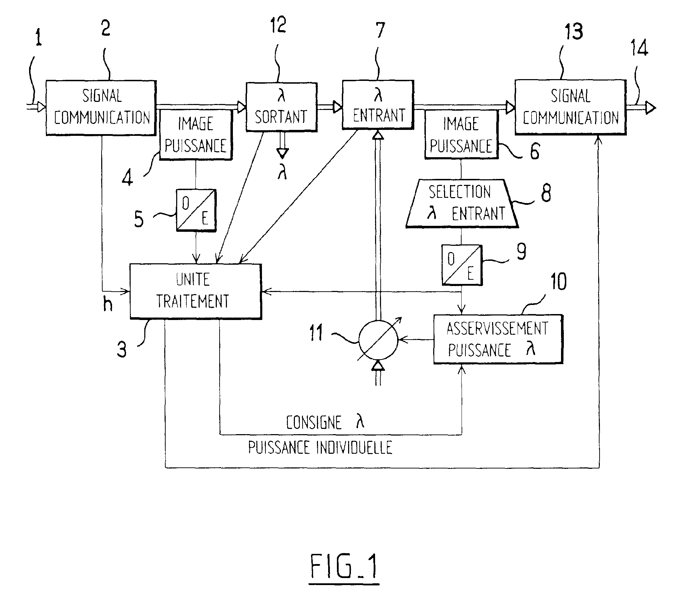

La figure 1 illustre un équipement de collecte mettant en oeuvre le procédé selon l'invention en relation avec un équipement de collecte comportant une longueur d'onde sortante et une longueur d'onde entrante.

De façon connue en soi, le signal optique modulé 1, représenté par une double flèche sur la figure, comporte un signal de communication qui est extrait par un organe d'extraction 2 à l'entrée de l'équipement de collecte. Ce signal de communication comporte en particulier l'indication du nombre n de longueurs d'ondes contenues dans le signal modulé à l'entrée de l'équipement de collecte considéré.

Ce signal est envoyé à une unité de traitement 3 mettant en oeuvre le procédé selon l'invention.

Egalement de façon connue en soi, l'équipement de collecte comporte un coupleur 4 prélevant une partie du signal optique modulé donnant une image optique de la puissance totale de ce signal.

Selon l'invention la partie de signal modulé ainsi prélevée est directement convertie par un convertisseur optique/électrique 5. L'image électrique de la puissance totale du signal modulé est envoyée à l'unité de traitement qui effectue la division de cette puissance totale par le nombre de longueurs d'ondes individuelles afin d'en déduire une consigne de puissance moyenne par longueur d'onde. La consigne de puissance moyenne est envoyée à une boucle de régulation de puissance individuelle de longueur d'onde comprenant un coupleur 6 disposé en aval d'un organe d'injection de longueur d'onde entrante 7, un organe de sélection 8, par exemple un démultiplexeur ou un filtre, relié au coupleur 6 pour sélectionner la longueur d'onde entrante dans la partie de signal prélevée, un convertisseur optique/électrique 9 relié à l'organe de sélection, un organe d'asservissement de puissance 10 recevant d'une part la consigne de puissance individuelle émise par l'unité de traitement 3 et d'autre part l'image de la puissance individuelle de la longueur d'onde entrante envoyée par le convertisseur optique/ électronique 9, et un atténuateur variable 11 disposé en amont de l'organe d'injection de longueur d'onde entrante 7 et commandé électriquement par l'organe d'asservissement de puissance 10.

Par ailleurs l'équipement de collecte comporte de façon connue en soi un organe d'extraction 12 de la longueur d'onde sortante disposé en amont de l'organe d'injection 7 de la longueur d'onde entrante et relié à l'unité de traitement 3, et un organe d'injection 13 relié à l'unité de traitement 3 pour injecter dans le signal modulé sortant 14 un signal de communication contenant les informations des événements survenus dans l'équipement de collecte et en particulier la nouvelle valeur du nombre de longueurs d'ondes.

En pratique, on remarquera que la boucle de régulation de puissance de la longueur d'onde entrante tiendra compte de l'atténuation résultant de l'organe d'extraction 12 de la longueur d'onde sortante, de l'organe d'injection 7 de la longueur d'onde entrante et du coupleur 6 de prélèvement d'une image de puissance, ces données étant connues par elles-mêmes et pouvant donc être incluses dans l'organe d'asservissement de puissance 10 de façon qu'à la sortie de l'équipement de collecte la puissance de la longueur d'onde entrante soit égale à la puissance individuelle des autres longueurs d'ondes qui traversent l'équipement de collecte sans modification.

Afin d'inclure dans le signal de communication une information d'alarme dans le cas où la puissance individuelle de la longueur d'onde entrante n'est pas égale à la puissance moyenne des autres longueurs d'ondes, soit par suite d'une panne de la boucle de régulation soit par suite d'une panne du transpondeur émettant la longueur d'onde entrante, des informations sur la longueur d'onde entrante sont également envoyées à l'unité de traitement 3 afin que celle-ci puisse déterminer le nombre de longueurs d'ondes effectivement contenues dans le signal modulé 14 et introduire cette information dans le signal de communication à l'attention des équipements de collecte disposés en aval dans le réseau.

Dans un mode de mise en oeuvre préféré du procédé selon l'invention le nombre de longueurs d'ondes contenues dans le signal modulé arrivant 1 et la puissance totale de ce signal sont mémorisés à intervalles réguliers afin de permettre la poursuite du fonctionnement de l'équipement de collecte considéré, même en cas de panne de certains éléments du réseau. En particulier, lorsque le canal de communication est en panne et n'émet plus de signal de communication, il est alors possible de continuer à calculer la puissance individuelle par longueur d'onde en divisant la puissance totale reçue mesurée par le nombre de longueurs d'ondes mémorisées. De même si la ligne de transmission du signal optique modulé est interrompue en amont de l'équipement de collecte, il reste possible de poursuivre l'injection de la longueur d'onde entrante et de transmettre celle-ci vers les équipements de collecte aval en divisant la puissance totale mémorisée par le nombre mémorisé de longueurs d'ondes dans le signal optique modulé normalement reçu.

Dans le cas où l'interruption de ligne est programmée, par exemple pour la mise en service d'un nouvel équipement de collecte, une information est envoyée au préalable dans le signal de communication pour inhiber l'action de la boucle de régulation de puissance individuelle ou donner les valeurs à prendre en compte pendant l'interruption de la ligne puis après son rétablissement.

Lors d'une mise en service d'une nouvelle longueur d'onde dans le réseau, une augmentation de la puissance totale du signal optique modulé peut être mesurée à l'entrée de l'équipement de collecte avant que l'information correspondante sur le nombre de longueurs d'ondes contenues dans ce signal ait été mise à jour dans le signal de communication. Préalablement à cette mise en service, une instruction sera donc de préférence envoyée dans le signal de communication afin d'inhiber le calcul habituel de la consigne de puissance individuelle.

Le procédé selon l'invention fonctionne d'autant mieux que la puissance individuelle moyenne calculée est proche de la valeur réelle des puissances individuelles des différentes longueurs d'ondes contenues dans le signal modulé. Les réseaux actuels permettent en particulier un fonctionnement satisfaisant par la régulation de densité qui est effectuée, en particulier par l'introduction dans chaque longueur d'onde de signaux de bourrage lorsque celle-ci n'est pas utilisée.

Les signaux modulés transmis dans les réseaux existants comprennent généralement seize ou trente-deux, voire même un nombre plus élevé de longueurs d'ondes, ce qui implique l'utilisation d'un nombre correspondant de convertisseurs optique/électrique lorsque l'on met en oeuvre un procédé de régulation de puissance classique. On remarquera qu'avec le procédé selon l'invention, ce nombre est ramené à deux seulement dans le cas d'une seule longueur d'onde entrante, et est augmenté d'une unité seulement par longueur d'onde supplémentaire. Le gain en coût d'un équipement de collecte mettant en oeuvre le procédé selon l'invention est donc substantiel.

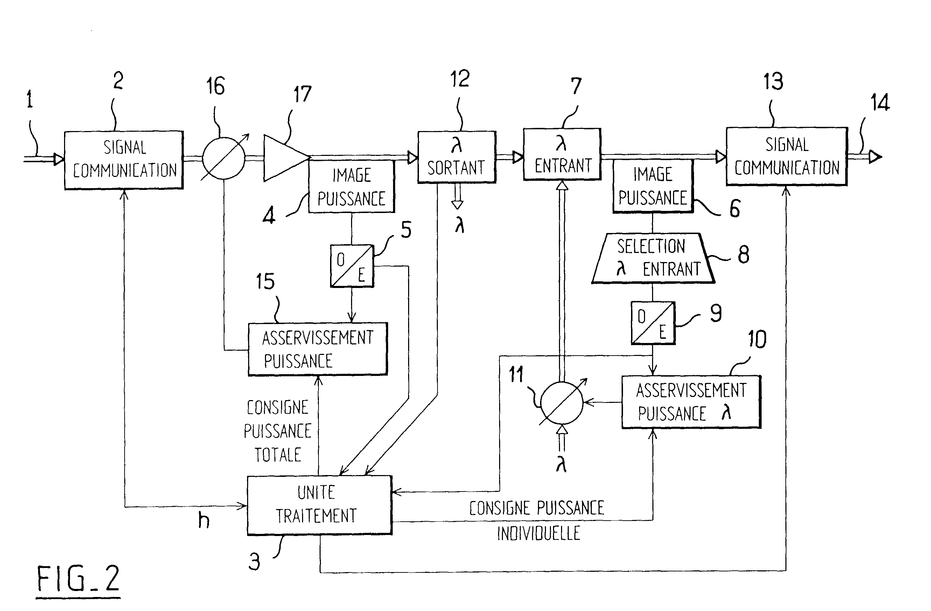

La figure 2 illustre un mode de mise en oeuvre du procédé selon l'invention avec amplification permettant de remettre à niveau la puissance individuelle des différentes longueurs d'ondes contenues dans le signal optique modulé. Sur cette figure, les éléments identiques à ceux de la figure 1 portent les mêmes références numériques et ne feront pas l'objet d'une nouvelle description. Par rapport à l'équipement de collecte de la figure 1, l'équipement de collecte de la figure 2 comporte une boucle de régulation de la puissance totale comprenant un organe d'asservissement de puissance 15 recevant d'une part du convertisseur optique/électrique 5 l'indication de la puissance totale contenue dans le signal modulé et d'autre part de l'unité de traitement 3 une consigne de puissance totale calculée par l'unité de traitement en multipliant la puissance individuelle souhaitée par le nombre de longueurs d'ondes dans le signal modulé. L'organe d'asservissement de puissance 15 est relié à un atténuateur variable à commande électrique 16 disposé en amont d'un amplificateur 17 à gain constant.

Lorsque la boucle de régulation de la puissance totale du signal modulé fonctionne de façon satisfaisante, la consigne de puissance individuelle envoyée à l'organe d'asservissement 10 de la longueur d'onde entrante est normalement égale à la puissance individuelle souhaitée. Dans le cas où la boucle de régulation de puissance totale présente une défaillance, il reste néanmoins possible de faire fonctionner l'équipement de collecte de la figure 2 comme celui de la figure 1.

Bien entendu, l'invention n'est pas limitée aux modes de mise en oeuvre décrits et on peut y apporter des variantes de réalisation sans sortir du cadre de l'invention tel que défini par les revendications.

En particulier bien que le procédé selon l'invention ait été décrit en relation avec un équipement de collecte comprenant une seule longueur d'onde entrante, le procédé selon l'invention peut être mis en oeuvre avec plusieurs longueurs d'ondes entrantes, chaque dispositif d'injection de la longueur d'onde entrante étant pourvu d'une boucle de régulation individuelle en ajoutant pour chaque longueur d'onde à la sortie de l'organe de sélection 8 un convertisseur optique/ électrique individuel relié à un organe d'asservissement individuel recevant une consigne de puissance moyenne et servant à commander un organe de régulation individuel 11.

Par ailleurs, dans le cas d'un équipement de collecte ne comportant pas d'amplification, les informations relatives au niveau de puissance individuelle des longueurs d'ondes peuvent être transférées par le signal de communication à un équipement de collecte disposé en amont et comportant un organe d'amplification afin d'agir sur la consigne de puissance totale de cet organe d'amplification et anticiper ainsi sur des atténuations de puissance résultant de pertes sur la ligne. On peut également utiliser le signal de communication pour transmettre en amont une information sur la puissance moyenne individuelle et supprimer dans l'organe de collecte amont recevant cette information l'organe de mesure de puissance et le convertisseur optique/électrique correspondant.

Dans le cas d'une amplification du signal modulé comme illustré par la figure 2, on peut remplacer l'amplificateur à gain fixe 17 associé à un atténuateur variable 16 par un amplificateur à gain variable. On pourrait également prévoir cette amplification en aval de l'organe d'injection 7 de la longueur d'onde entrante.

## Revendications

1. Procédé de régulation de puissance d'au moins une longueur d'onde entrante injectée dans un signal optique modulé selon une série de longueurs d'ondes, **caractérisé en ce qu'**il comporte les étapes de réaliser une mesure (5) de la puissance totale du signal modulé, d'en déduire une consigne de puissance moyenne par longueur d'onde, et d'assurer une régulation de puissance individuelle (10) de la longueur d'onde entrante au moyen de la consigne de puissance moyenne.

2. Procédé selon la revendication 1, **caractérisé en ce qu'**il comporte en outre l'étape d'amplifier (17) le signal optique modulé selon une consigne de puissance totale.

3. Procédé selon la revendication 2, **caractérisé en ce que** l'amplification selon une consigne de puissance totale est effectuée en amont de l'injection de la longueur d'onde entrante.

4. Procédé selon l'une quelconque des revendications 1 à 3, **caractérisé en ce qu'**il comporte en outre l'étape de mémoriser la puissance totale mesurée.

5. Procédé selon l'une quelconque des revendications 1 à 4, **caractérisé en ce qu'**il comporte en outre l'étape de mémoriser le nombre (n) de longueurs d'ondes dans le signal modulé.
